(19) Europäisches Patentamt

European Patent Office

Office européen des brevets

(11) EP 0 487 137 B1

(12) **EUROPEAN PATENT SPECIFICATION**

(45) Date of publication and mention
of the grant of the patent:
**06.08.1997  Bulletin 1997/32**

(51) Int Cl.⁶: **G09G 3/36**

(21) Application number: **91202926.1**

(22) Date of filing: **12.11.1991**

(54) **Display device**

Anzeigegerät

Dispositif d'affichage

(84) Designated Contracting States:
**DE FR GB IT NL**

(30) Priority: **19.11.1990  NL 9002516**

(43) Date of publication of application:
**27.05.1992  Bulletin 1992/22**

(60) Divisional application: **96202955.9**

(73) Proprietor: **Philips Electronics N.V.
5621 BA Eindhoven (NL)**

(72) Inventors:
• **Hartman, Robert Arnold
  NL-5656 AA Eindhoven (NL)**
• **Knapp, Alan George
  NL-5656 AA Eindhoven (NL)**

(74) Representative: **Raap, Adriaan Yde et al
INTERNATIONAAL OCTROOIBUREAU B.V.,
Prof. Holstlaan 6
5656 AA Eindhoven (NL)**

(56) References cited:
EP-A- 0 196 889        EP-A- 0 229 716
EP-A- 0 381 429        EP-A- 0 436 384

## Description

The invention relates to a display device according to the introductory part of Claim 1.

Display devices of this type are suitable for displaying alpha-numerical information and video information by means of passive electro-optical display media such as, for example, liquid crystals, electrophoretic suspensions and electrochromic materials.

A display of the type described is known from EP-A-0.196.889. In the display described a correction voltage is applied to the data voltages to prevent a level shift attributable to the capacitance between the gate- and source-electrode of a driving transistor.

Said measure is meant to prevent the introduction of a DC-voltage on the liquid layer; to obtain a substantially zero DC-component different correction values are used for the positive and negative charging of the pixels. If necessary a correction for the capacitance of the liquid crystal can be introduced.

The voltage across said liquid layer is now controlled to be a pure AC-signal with no DC-component.

In other display devices the pixels are driven *via* MIMs or thin-film transistors whose gate electrodes are connected to selection rows and whose source electrodes are connected to data rows.

Notably in liquid crystal display devices the capacitance associated with a pixel may vary with the drive voltage; this may detrimentally influence the response time. This influence can be easily demonstrated by way of an example.

A display element or picture cell (pixel) has, for example, a capacitance $C_I$ at a drive voltage $V_I$. When the pixel is driven with a voltage $V_J$ in an address or selection period, the total charge on the pixel will be $C_I V_J$, while the pixel will tend to adjust itself at the capacitance $C_J$ associated with the voltage $V_J$, *inter alia,* because the liquid crystal material is oriented differently. Due to charge preservation the voltage and the capacitance of the pixel will settle at values $V_K$ and $C_K$ in the non-selection period, for which it holds that $V_K.C_K = C_I.V_J$. In other words, the value $V_J$ to be impressed is usually not reached and when the data remain the same, the pixel will have to be driven at least once more the value $V_J$, which leads to a delayed response.

Another source which leads to an erroneous first adjustment and hence a delayed response in a picture display device using active drive is the so-called DC offset voltage which occurs when using e.g. diode drive mode, but also when using other drive modes such as, for example, the drive mode using thin-film transistors.

One of the objects of the present invention is to eliminate the above-mentioned drawbacks as much as possible. It is a further object of the invention to provide a display device having a fast response and minimal or no "image retention".

To this end a display device according to the invention is characterized according to the characterizing part of Claim 1.

The invention is based, inter alia, on the recognition that variations of the voltage across a pixel caused by voltage-dependent capacitances in the pixel can be taken into account in advance, by taking into account the previous pixel voltage.

In this way the pixels are submitted to a pre-adapted drive voltage which at least substantially prevents the above-described delay.

The correction means can be adapted in such a way that they correct for a pixel capacitance which varies with the voltage-adjustment at the transmission/voltage characteristic.

EP-A-0.381.429 describes the correction of column voltages depending on incoming signals by comparing the output level of a column driver with the output level presented to another previously selected row. By means of a differential amplifier the column voltage is given a value in accordance with the incoming signal level which is compared with the output level presented to another previously selected row, so to the same column during selection of another row.

The correction means can also correct for an externally caused variation of the voltage-adjustment at the transmission/voltage characteristic such as, for example, the variation caused by capacitances of the drive element.

In the non-prepublished application EP-A-436.384 a device is shown in which the video signal is provided with an offset voltage related to the incoming video signal. The offset voltage depends on a voltage region within which the value of the incoming signal voltage lies. So incoming video signals of different voltage level still obtain identical offset voltages within one such a voltage region, leading to different pixel voltages.

Generally, the column voltage to be used in a display device after correction is defined by:

$$V_c = \frac{C.(V').V'}{C(V)}$$

in which

V : previous column voltage across the pixel,
V': desired column voltage across the pixel,

and in which

C(V): the capacitance of the pixel dependent on the column voltage.

The correction stated above can be performed, for example, directly by means of a microprocessor, but this is usually rather cumbersome. It is therefore preferred to use a look-up table in which the digitally coded voltages V, V' generate an address. In a (video) signal of 8 bits this would lead to a 16-bit address, in other words, a RAM or ROM for the look-up table of 64 K correction values. However, in practice it is sufficient to use an addressing accuracy of 12-14 bits so that it is sufficient to use 4K-16K memory sites for correction values. Said RAM, ROM or microprocessor may be present as a separate unit, but it may alternatively form part of a larger memory or drive system which is already present for, for example, signal processing.

Moreover, during selection of a pixel an offset voltage which is also defined by the capacitance of the pixel can be generated across the pixel with a value of:

$$V_{off} = \frac{V_R C_X}{C_X + C_{LC}}$$

($V_R$: amplitude of selection pulse during falling edge, $C_X$: capacitance of drive element, for example, the gate-drain capacitance of a thin-film transistor or the capacitance associated with a diode or MIM (metal-isolator-metal), $C_{LC}$: voltage-dependent capacitance of the liquid crystal). As a result, the voltage across the pixels acquires a value which differs from the externally applied signal voltage.

Since both $C_X$ and $C_{LC}$ may be voltage-dependent, a correction can be defined in the same way as described above for the drive voltage of a pixel. This correction can be performed for one of the capacitances $C_X$, $C_{LC}$ separately, or combined for both.

If the external signal differs little from the signal presented during the previous selection period, the correction will usually be small enough to be performed completely within one picture period. In the case of larger differences it may be advantageous to use, as it were, an overcompensation because of the inertia of the pixel and because a larger directing force must be exerted on the liquid crystal molecules. A device according to the invention, in which this is realised, is characterized in that the correction means perform an extra correction at a difference between an externally applied signal and the (column) voltage applied during a previous selection period, which difference is larger than a predetermined threshold value.

A method of manufacturing a display device according to the invention is characterized in that during manufacture at least a part of the drive unit is adjusted in such a way that, dependent on applied signals, the drive unit gives the electrodes such drive voltages that a deviation of the transmission level of a pixel due to a voltage-dependent behaviour of the pixel is at least partly compensated for.

The invention will now be described in greater detail with reference to some embodiments and the drawings in which

Fig. 1 shows diagrammatically a display device according to the invention;
Fig. 2 shows diagrammatically several correction possibilities;
Fig. 3 shows the drive of a pixel *via* a thin-film transistor;
Fig. 4 shows the associated drive signals and voltages across the pixel, and
Figs. 5 and 6 show some forms of correction possibilities according to the invention.

The Figures are diagrammatic; corresponding components are generally denoted by the same reference numerals.

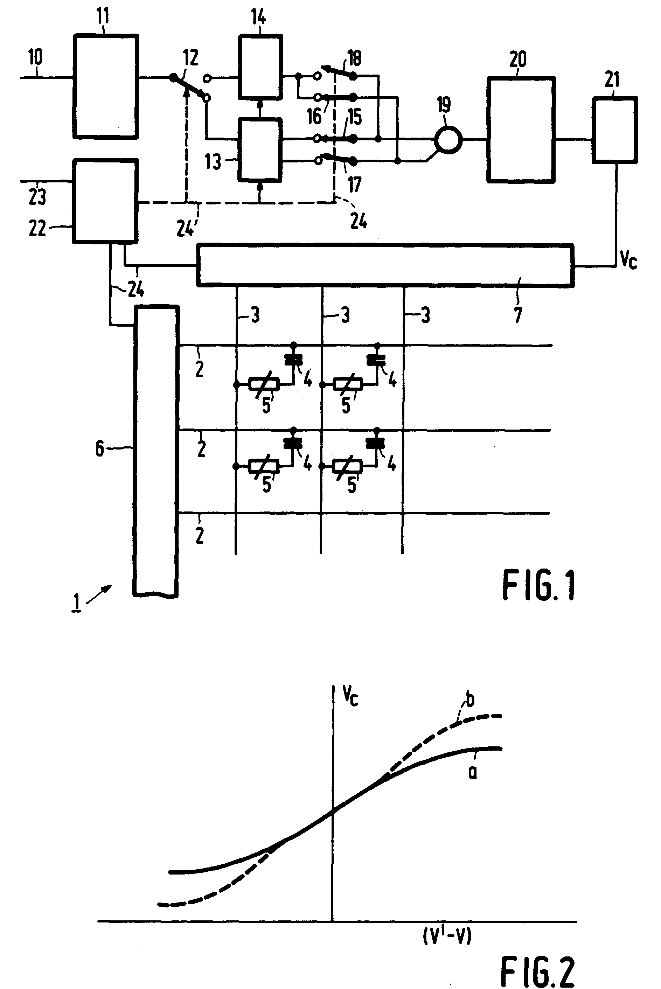

The display device of Fig. 1 comprises a plurality of pixels 4, for example, liquid crystal pixels arranged in rows and columns. These pixels are driven *via* switching elements 5, for example, diodes or MIMs (metal-isolator-metal) and are arranged in a matrix configuration. Information present at the column electrodes 3 is presented to the pixels 4 by successively selecting (energizing) row electrodes 2. Row electrodes 2 are successively selected by means of, for example, a shift register 6, while the information to be presented for a selected row of pixels is stored in a register 7.

An incoming video signal 10 may be directly connected to the register 7 for this purpose. The voltages at the column electrodes 3 are then equal to the presented video voltages for each pixel. Dependent on the drive mode, the switching elements 5 used in the matrix (diodes, MIMs, TFTs), the column voltages and the selection voltages at the row electrodes 2, which voltages originate from the shift register 6, a pixel 4 is subjected to a voltage $V_I$ during selection. The liquid crystalline material which is used for the pixels has a given voltage-dependent dielectric constant. The capacitance of a pixel is therefore voltage-dependent and a given capacitance $C_I$ is associated with the voltage $V_I$. If the voltage is $V_J$ in a subsequent frame or field period during selection, the pixel acquires a charge $C_I V_J$ during selection. Due to charge preservation the voltage across the pixel changes during non-selection to a value $V_K$, for which it holds that: $V_K C_K = C_I V_J$ (possible charge losses due to, for example, leakage currents have not been taken into account in this case). The pixel thus does not immediately acquire the desired voltage $V_J$ (and the associated capacitance $C_J$), which becomes manifest in a delayed response.

According to the invention this can be prevented by giving the data or column voltages a corrected voltage $V_c$ in advance, for which it holds that:

$$V_c = \frac{V_d C_d}{C(V)}$$

so that the pixel acquires a charge $C_I V_c = V_d C_d$ which corresponds to the desired adjustment.

More generally:

$$V_c = \frac{C(V').V'}{C(V)}$$

in which:

C(V): voltage-dependent capacitance of the pixel;
V: previous column voltage (or voltage across the pixel);
V': desired column voltage (or voltage across the pixel).

Fig. 1 shows a device with which the above-described voltage $V_c$ can be generated.

The incoming video signal 10 is converted by means of an A/D converter 11 into digital signals of, for example, 8 bits which are stored in a first memory 13 *via* a first switch 12. Dependent on the mode of operating the display device during a previous frame or field period, a second memory 14 is charged with the associated video information. The previous field here means the previous field of the same kind (odd or even). When one of the rows is selected (row electrodes 2), the digital information associated with this row is passed on for each column 3 from the memories 13, 14 to an address circuit 19 (for example, an address register) *via* the switches 15, 16. The drive circuit 22, which receives a synchronizing signal 23, ensures the mutual synchronization of the different switches, registers, memories, etc. *via* drive lines 24.

The position of the switches 15, 16 is such that the 8 bits from the first memory 13 constitute the most significant part of the address in the address circuit 19 which drives a look-up table 20. The least significant address bits are constituted by the m most significant bits from the second memory 14. The reference m indicates, for example, a value of between 4 and 8. At m = 4 it is sufficient to use a memory capacity of the look-up table 20 of 4 k memory sites, while nevertheless obtaining a satisfactory correction.

The look-up table 20, which comprises, for example, a ROM or RAM, is programmed in such a way that a corrected drive value defined by the above-mentioned formula is passed on (in a digital form) to the D/A converter 21. The corrected column voltages converted to analog values are then loaded into the register 7.

Dependent on the drive mode, a second memory 14 is loaded with video information during a subsequent frame or field period by changing over switch 12. When the rows 2 are being read, the switches 15, 16, 17, 18 are changed over. The most significant part of the address in the address circuit 19 now comes from the second memory 14 *via* switch 18, while the least significant part comes from the first memory 13 *via* switch 17, in which memory video information has been stored during a previous frame (field) period. Data voltages which are largely corrected for capacitance variations of the electro-optical material (liquid crystal material) in accordance with the previously mentioned formula are thus presented to the column electrodes 3 *via* the look-up table 20 and the D/A converter 21. This compensation will lead to a faster response, notably at larger variations of the voltage across a pixel.

Fig. 2 shows by way of example how the corrected voltage $V_c$ may vary (line a) as a function of the difference between a voltage (V') presented for a given pixel and the voltage for the same pixel during a previous selection (V). The relation shown in Fig. 2 can be realised by means of the look-up table 20, but also, for example, by means of a microprocessor.

The rate at which the liquid crystal molecules assume a different orientation upon voltage variations may still be too slow at larger voltage variations (for example, due to too weak reorientation forces). Consequently, the desired transmission value is not immediately reached in the first selection period, even if the above-mentioned correction is used. In that case a correction which, as it were, is too large may be performed for large deviations between a previous column voltage V and a desired column voltage V'. The correction voltage which is dependent on (V'-V) is then defined, for example, by means of a relation which is partly illustrated by means of broken lines (line b). This correction can be implemented by means of a look-up table 20. At larger values of (V'-V) there is, as it were, overcompensation, while the original compensation is maintained at smaller values.

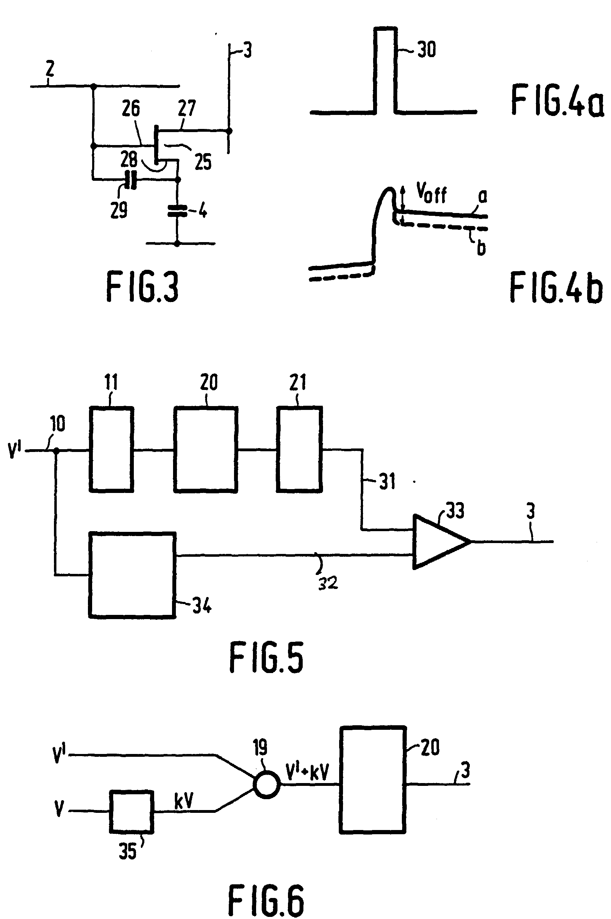

Fig. 3 shows diagrammatically a pixel 4 which is driven by a thin-film transistor 25 and which forms part of a dislay device arranged in a matrix configuration comparable with that of Fig. 1. A row electrode 2 is connected to the gate electrode 26 of the transistor 25, while the column electrode 3 is connected to the source contact 27. The drain contact 28 is connected to the pixel 4 which has a voltage-dependent capacitance ($C_{LC}$). The capacitance 29 represents a capacitance $C_X$ associated with the transistor 25 (channel capacitance, gate-drain capacitance). Due to capacitive coupling this capacitance produces an offset voltage across the pixel with a value of:

$$V_{off} = \frac{V_R.C_X}{C_X + C_{LC}}$$

at the falling edge of a selection pulse 30 (Fig. 4a) on the row electrode 2. ($V_R$: amplitude selection pulse, falling edge). Since $C_{LC}$ is voltage-dependent again (and is thus a function of the voltage across the pixel), $V_{off}$ is also voltage-dependent. A high capacitance $C_{LC}$ leads, for example, to a response on the pixel as is illustrated by means of curve a in Fig. 4b, whereas a lower value gives rise to curve b. The voltage drop $V_{off}$ across the pixel can be compensated again by employing a correction compensating for this voltage drop, dependent on the applied drive voltages.

To this end the external signal 10 is again applied to an A/D converter 11 (Fig. 5). It addresses a look-up table 20 whose output supplies a (digitized) corrected voltage value and which, if desired, also is corrected for voltage dependency of $C_X$. A correction voltage 31 is obtained *via* a D/A converter 21. The normally processed signal 32 from the processor 34 is added to the correction voltage by means of the circuit 33 which applies the correct voltage to the column electrodes 3.

Similarly, corrections can be performed for matrices which are driven with diodes or MIMs.

This correction may of course also be combined with that described with reference to Figs. 1, 2.

The correction may also be based on a weighted average of the digital values of the voltages V' and V, in which, for example, V is multiplied by a factor k in the circuit 33 and subsequently the (digitized) voltages V' and kV are added in an address register 19 of the look-up table 20.

To program a look-up table 20, for example, the voltage dependence of the liquid crystal capacitance is determined first. The correction which must be stored in the look-up table (RAM or ROM) is calculated with reference to the formula:

$$V_c = \frac{C(V').V'}{C(V)}$$

A device for adjusting the look-up table comprises means for programming a RAM or ROM, for example, in accordance with a correction curve in Fig. 2, either or not using overcompensation, or in accordance with the formula:

$$V_{off} = \frac{V_R.C_X}{C_X+C_{LC}}$$

if there is only a correction for the voltage drop at the end of a selection pulse. In that case $V_R$ and $C_X$ must also be known. The two corrections can of course also be provided jointly in a look-up table in the form of a ROM or RAM. The device need not exclusively comprise programming means but it may be simultaneously equipped with apparatus for measuring the capacitance of electro-optical materials (particularly liquid crystal material) or with ready-made matrix panels. Measuring and adjusting may then be coupled directly.

## Claims

1. A display device (1) comprising an electro-optical medium between two supporting plates, provided with a system of pixels (4) arranged in rows and columns, means for selecting rows of pixels via row connections (2) and providing signals to column connections (3), such that during operation rows of pixels are selected via drive elements (5, 25) between pixels and row connections or between pixels and column connections, said column connections (3) being provided with column voltages during at least a part of a selection period and the device being provided with correction means (13,14,20,21) for correction of column voltages, characterized in that the correction means comprise two memories (13, 14) for storing incoming signals associated with a row of pixels during subsequent selections of said row, the correction means being addressed by at least parts of the contents of both memories, stored during selection and during the previous selection of said row, the correction being such that a column voltage is raised if the voltage level of the incoming signal is higher than the voltage level of the incoming signal during selection of the same row during the previous selection, a column voltage remains the same if the voltage level of the incoming signal equals the voltage level of the incoming signal of the same row during the previous selection and a column voltage is lowered if the voltage level of the incoming signal is lower than the voltage level of the incoming signal during selection of the same row during the previous selection.

2. A display device according to claim 1 characterized in that the correction means comprise a look-up table (20) in which the address is generated by digitally coded column voltages associated with a pixel (4) during subsequent selections of said pixel.

3. A display device as claimed in claim 1 or 2 characterized in that the display device comprises further correction means (11, 20, 21, 33) for correcting the incoming signals for off-set voltages.

## Patentansprüche

1. Wiedergabeanordnung (1) mit einem elektrooptischen Medium zwischen zwei Trägerplatten, mit einem System reihen- und spaltenweise gegliederter Bildelemente (4), mit Mitteln zum Selektieren von Reihen Bildelementen über Reihenverbindungen (2) und zum Liefern von Signalen zu Spaltenverbindungen (3), so daß im Betrieb Reihen von Bildelementen über Ansteuerungselemente (5, 25) zwischen Pixels und Reihenverbindungen oder zwischen Pixels und Spaltenverbindungen selektiert werden, wobei die genannten Spaltenverbindungen (3) während wenigstens eines Teils einer Selektionsperiode mit Spaltenspannungen versehen werden und wobei die Anordnung mit Korrekturmitteln (13, 14, 20, 21) versehen ist zum Korrigieren von Spaltenspannungen, dadurch gekennzeichnet, daß die Korrekturmittel zwei Speicher (13, 14) aufweisen zum Speichern eintreffender Signale, die einer Reihe von Bildelementen während aufeinanderfolgender Selektionsvorgänge der genannten Reihe zugeordnet sind, wobei die Korrekturmittel durch wenigstens Teile des Inhaltes der beiden Speicher adressiert werden, gespeichert während der Selektion und während der vorhergehenden Selektion der genannten Reihe, wobei die Korrektur derart ist, daß eine Spaltenspannung erhöht wird, wenn der Spannungspegel des eintreffenden Signals höher ist als der Spannungspegel des eintreffenden Signals während der Selektion derselben Reihe während der vorhergehenden Selektion, wobei eine Spaltenspannung dieselbe bleibt, wenn der Spannungspegel des eintreffenden Signals dem Spannungspegel des eintreffenden Signals derselben Reihe während der vorhergehenden Selektion entspricht und wobei eine Spaltenspannung verringert wird, wenn der Spannungspegel des eintreffenden Signals niedriger ist als der Spannungspegel des eintreffenden Signals während der Selektion derselben Reihe während der vorhergehenden Selektion.

2. Wiedergabeanordnung nach Anspruch 1, dadurch gekennzeichnet, daß die Korrekturmittel eine Nachschlagtabelle (20) aufweisen, in der die Adresse durch digital codierte Spaltenspannungen erzeugt wird, die einem Pixel (4) während aufeinanderfolgenden Selektionsvorgänge des genannten Pixels zugeordnet ist.

3. Wiedergabeanordnung nach Anspruch 1 oder 2, dadurch gekennzeichnet, daß die Wiedergabeanordnung weiterhin Korrekturmittel (11, 20, 21, 33) aufweist zum Korrigieren der Offset-Spannungen der eintreffenden Signale.

**Revendications**

1. Dispositif d'affichage (1) comprenant un support électro-optique entre deux plaques de support, pourvu d'un système de pixels (4) agencés en rangées et en colonnes, des moyens pour sélectionner des rangées de pixels via des connexions de rangées (2) et délivrer des signaux à des connexions de colonnes (3), de telle sorte qu'en cours de fonctionnement, des rangées de pixels soient sélectionnées via des éléments de commande (5, 25) entre des pixels et des connexions de rangées ou entre des pixels et des connexions de colonnes, lesdites connexions de colonnes (3) étant pourvues de tensions de colonnes au cours d'au moins une partie de la période de sélection et le dispositif étant pourvu de moyens de correction (13, 14, 20, 21) pour la correction de tensions de colonnes, caractérisé en ce que les moyens de correction comprennent deux mémoires (13, 14) pour stocker des signaux entrants associés à une rangée de pixels au cours de sélections suivantes de ladite rangée, les moyens de correction étant adressés par au moins des parties des contenus des deux mémoires, stockés au cours de la sélection et au cours de la sélection précédente de ladite rangée, la correction étant telle qu'une tension de colonne est augmentée si le niveau de tension du signal entrant est supérieur au niveau de tension du signal entrant au cours de la sélection de la même rangée pendant la sélection précédente, qu'une tension de colonne reste la même si le niveau de tension du signal entrant est égal au niveau de tension du signal entrant de la même rangée au cours de la sélection précédente et qu'une tension de colonne est réduite si le niveau de tension du signal entrant est inférieur au niveau de tension du signal entrant au cours de la sélection de la même rangée pendant la sélection précédente.

2. Dispositif d'affichage selon la revendication 1, caractérisé en ce que les moyens de correction comprennent une table de consultation (20) dans laquelle l'adresse est générée par des tensions de colonnes numériquement codées associées à un pixel (4) au cours de sélections suivantes dudit pixel.

3. Dispositif d'affichage selon la revendication 1 ou 2, caractérisé en ce que le dispositif d'affichage comprend d'autres moyens de correction (11, 20, 21, 33) pour corriger les signaux entrants pour tenir compte des tensions décalées.

FIG.1

FIG.2

FIG.4a

FIG.3

$V_{off}$

a

b

FIG.4b

FIG.5

$V^l$

$V^l+kV$

$V$

$kV$

FIG.6